# EUROPÄISCHE PATENTSCHRIFT

(11) **EP 2 899 563 B1**
(45) Veröffentlichungstag und Bekanntmachung des Hinweises auf die Patenterteilung: **20.06.2018**
(21) Anmeldenummer: 14195080.8
(22) Anmeldetag: 27.11.2014
(51) Int. Cl.: G01S 7/52, G01S 15/52, G01S 15/93

(54) **Verfahren und Vorrichtung zur Erkennung einer Fehlfunktion eines Ultraschallwandlers durch Auswerten einer Impedanz-Hüllkurve**
Method and device for detecting a malfunction of an ultrasonic transducer by evaluating an impedance envelope
Procédé et dispositif de reconnaissance d'une fonction erronée d'un convertisseur à ultrasons par évaluation d'une enveloppante d'impédance

(30) Priorität: 28.01.2014 DE 102014201482
(43) Veröffentlichungstag der Anmeldung: 29.07.2015
(73) Patentinhaber: ROBERT BOSCH GMBH, 70442 Stuttgart (DE)
(72) Erfinder: Treptow, Thomas, 71229 Leonberg (DE); Schmid, Dirk, 75397 Simmozheim (DE); Mayer, Philipp, 70176 Stuttgart (DE); Schumann, Michael, 70597 Stuttgart (DE); Scherwath, Bernd, 71229 Leonberg (DE)

(56) Entgegenhaltungen:
- DE-A1-102008 042 820

## Beschreibung

### Stand der Technik

Die vorliegende Erfindung betrifft ein Verfahren und eine Vorrichtung zur Erkennung einer Fehlfunktion eines Ultraschallwandlers.

Fahrerassistenzfunktionen basierend auf Ultraschallsensoren sind seit langer Zeit bekannt und im Serieneinsatz. Dabei wird die klassische Einparkhilfe, also eine Abstandsmessung mit entsprechender Signalisierung an den Fahrer eines Fahrzeugs, zunehmend um komplexere Funktionen ergänzt, wie z.B. Ausparkunterstützung, semi-autonomes Einparken mit Eingriff in die Längs- und Querführung des Fahrzeugs und Bremseingriffe während des Manövrierens bei niedrigen Geschwindigkeiten.

Bei solchen Systemen sendet ein Ultraschallsensor bzw. Ultraschallwandler ein Signal in die Fahrzeugumgebung aus und wandelt von Umgebungsobjekten reflektierte Signale in elektrische Signale um, welche von einer Auswerteeinheit hinsichtlich Laufzeit, Amplitude etc. ausgewertet werden. Aufgrund erhöhter Sicherheitsrelevanz solcher Funktionen ist es von zunehmender Bedeutung, verbesserte Verfahren zur Erkennung von Sensordegradation gegenüber dem aktuellen Stand der Technik zu entwickeln. Unter einer "Sensordegradation" werden Funktionseinbußen aufgrund von Alterungserscheinungen, Verschmutzungen, Vereisungen, Schneebelag, Schlamm- und Insektenablagerungen auf dem Wandler sowie Beschädigungen desselben, beispielsweise durch Steinschlag, Verkehrsunfälle, Vandalismus etc. verstanden. Die im Stand der Technik bekannten Verfahren bieten keine zufriedenstellenden Lösungsansätze, um einen Ultraschallwandler im laufenden Betrieb auf die vorgenannten Funktionsbeeinträchtigungen zu überprüfen.

Ein Ultraschallsensor nach dem Stand der Technik ist aus der DE102008042820A1 bekannt. Dieser umfasst eine Funktionsüberwachungsvorrichtung, die dazu ausgelegt ist, eine Impedanzkennlinie des Sensors in Abhängigkeit einer Anregungsfrequenz zu ermitteln.

Es ist daher eine Aufgabe der vorliegenden Erfindung, die vorgenannten Bedürfnisse zu befriedigen.

### Offenbarung der Erfindung

Das erfindungsgemäße Verfahren zur Erkennung einer Fehlfunktion eines Ultraschallwandlers umfasst die Schritte eines Beaufschlagen des Ultraschallwandlers mit einem Anregungssignal, eines Ermitteln eines Impedanzsignals, welches die Impedanz des Ultraschallwandlers hinsichtlich des Anregungssignals beschreibt, eines Erzeugen einer Impedanz-Hüllkurve des Impedanzsignals, und eines Vergleichens der Impedanz-Hüllkurve mit einer Referenz-Hüllkurve, wobei eine Fehlfunktion detektiert wird, wenn die Impedanz-Hüllkurve ungleich der Referenz-Hüllkurve ist.

Somit wird ein besonders zuverlässiges Verfahren zur Erkennung einer Fehlfunktion des Ultraschallwandlers geschaffen, das während einer Abstandsmessung mittels des Ultraschallwandlers durchgeführt werden kann. Das Verfahren ist stabil gegenüber Fehlerfassungen einzelner Impedanzwerte des Impedanzsignals.

Die Unteransprüche zeigen bevorzugte Weiterbildungen der Erfindung.

Es ist vorteilhaft, wenn das Anregungssignal, insbesondere eine Wechselspannung, mehrere Frequenzen, insbesondere einen Sweep, umfasst. Ein Sweep ist eine Wechselspannung konstanter Amplitude, deren Frequenz periodisch und stetig einen vorgegebenen Bereich durchläuft. Dies ist vorteilhaft, da somit auch Impedanzänderungen erkannt werden, die nur bei bestimmten Frequenzen auftreten. Weiterer Vorteil ist die kurze Messzeit, d.h. das Frequenzband wird in der Sendezeit des Anregungssignals abgefahren. Ebenso vorteilhaft ist es, wenn das Anregungssignal für eine Abstandsmessung mit dem Ultraschallwandler verwendet wird. Somit wird der Ultraschallsensor nicht durch das erfindungsgemäße Verfahren blockiert und Abstandsmessungen können zu jeder Zeit erfolgen. Insbesondere erfolgt ein Absenken einer Verstärkung des Anregungssignals. Es wird somit das gleiche Anregungssignal verwendet wie in einem Messbetrieb, allerdings wird auf eine geringere Verstärkung umgeschaltet. Damit wird erreicht, dass sich das Messsignal im Aussteuerungsbereich eines Transformators befindet der dem Ultraschallwandler typischerweise vorgeschaltet ist. Dabei ist es insbesondere bei Kreuz-Echo-Sensoren vorteilhaft, die Impedanzmessung während des Messbetriebs zu einem Zeitpunkt durchzuführen, zu dem sich der Ultraschallsensor in einem Empfangsbetrieb befindet und ein zweiter Ultraschallsensor das Anregungssignal sendet. Erfindungsgemäß wird eine Fehlfunktion detektiert, wenn die Größe einer Differenzfläche, die als eine Fläche zwischen der Impedanz-Hüllkurve und der Referenz-Hüllkurve definiert ist, einen ersten Schwellenwert überschreitet. Auf diese Weise wird ein Zeitbereich des Anregungssignals betrachtet und dem Detektieren einer Fehlfunktion zugrunde gelegt. Somit wird der Einfluss einzelner Fehlmessungen im Zeitverlauf des Anregungssignals minimiert.

Es ist vorteilhaft, wenn mittels mehrerer Abstandswerte auf die Größe der Differenzfläche geschlossen wird, wobei ein Abstandswert ein Differenzwert oder ein Differenzbetrag ist, der jeweils einen Abstand zwischen der Impedanz-Hüllkurve und der Referenz-Hüllkurve bei einer bestimmten Frequenz und/oder zu einem bestimmten Zeitpunkt beschreibt. Damit kann auf eine aufwendige Hardware zum zeitkontinuierlichen Ermitteln der Differenzfläche verzichtet werden und es wird dennoch eine ausreichende Annäherung an die Differenzfläche erreicht.

Des Weiteren ist es vorteilhaft, wenn die Größe der Differenzfläche mittels eines Integrals bestimmt wird, das über eine Differenz zwischen der Impedanz-Hüllkurve und der Referenz-Hüllkurve gebildet wird. Damit wird eine sehr präzise Auswertung der Größe der Differenzfläche ermöglicht und somit die Zuverlässigkeit der Erkennung einer Fehlfunktion erhöht.

Ebenso vorteilhaft ist es, wenn eine Fehlfunktion detektiert wird, wenn ein zeitlicher Abstand oder ein Frequenzabstand zwischen einem Minimum der Impedanz-Hüllkurve und einem korrespondierenden Minimum der Referenz-Hüllkurve einen zweiten Schwellenwert überschreitet. Somit muss lediglich ein Wert für das Minimum der Referenz-Hüllkurve gespeichert werden, um diese ausreichend zu beschreiben.

Auch ist es vorteilhaft, wenn eine Fehlfunktion detektiert wird, wenn ein Impedanzunterschied zwischen einem Minimum der Impedanz-Hüllkurve und einem korrespondierenden Minimum der Referenz-Hüllkurve einen dritten Schwellenwert überschreitet. Somit muss lediglich ein Wert für das Minimum der Referenz-Hüllkurve gespeichert werden, um diese ausreichend zu beschreiben.

Insbesondere weist die Referenz-Hüllkurve eine Temperaturabhängigkeit, insbesondere von der Umgebungstemperatur, auf. Somit werden Fehler bei der Erkennung einer Fehlfunktion des Ultraschallwandlers vermieden, die durch eine Änderung der Impedanz des Ultraschallwandlers aufgrund einer veränderten Temperatur des Ultraschallwandlers verursacht werden.

Ferner ist eine Vorrichtung zur Abstandsmessung vorteilhaft, die einen Ultraschallwandler, eine Verarbeitungseinheit und ein Speichermittel zum Bereitstellen einer Referenz-Hüllkurve umfasst, wobei die Verarbeitungseinheit eingerichtet ist, das erfindungsgemäße Verfahren auszuführen. Eine solche Vorrichtung weist alle Vorteile des erfindungsgemäßen Verfahrens auf.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Blockschaltbild einer erfindungsgemäßen Vorrichtung zur Abstandsmessung in einer vorteilhaften Ausführungsform der Erfindung,
- Figur 2: ein Diagramm, in dem ein Impedanzsignal mit einer Impedanz-Hüllkurve und ein Referenzsignal mit Referenz-Hüllkurve gemäß einer vorteilhaften Ausführungsform der Erfindung gezeigt sind, und
- Figur 3: ein Diagramm, in dem eine Impedanz-Hüllkurve und eine Referenz-Hüllkurve gemäß einer vorteilhaften Ausführungsform der Erfindung gezeigt ist.

### Ausführungsformen der Erfindung

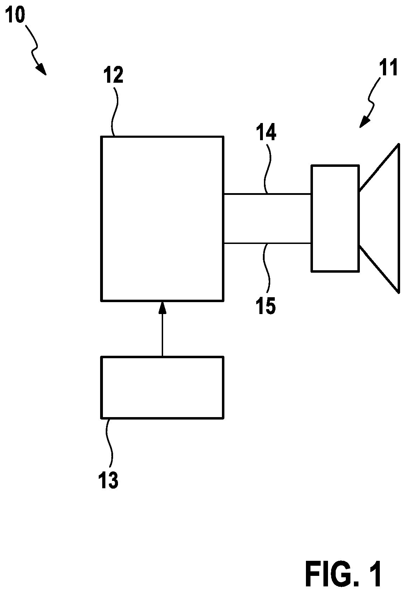

Figur 1 ist ein Blockschaltbild einer erfindungsgemäßen Vorrichtung 10 zur Abstandsmessung in einer vorteilhaften Ausführungsform. Die Vorrichtung 10 zur Abstandsmessung umfasst einen Ultraschallwandler 11 und eine Verarbeitungseinheit 12 und ein Speichermittel 13 zum Bereitstellen einer Referenz-Hüllkurve 31, wobei die Verarbeitungseinheit 12 eingerichtet ist, das erfindungsgemäße Verfahren auszuführen. Die Vorrichtung 10 wird von einem Ultraschallsensor umfasst.

Der Ultraschallwandler 11 ist ein elektroakustischer Schallwandler und ist über eine erste Signalleitung 14 und eine zweite Signalleitung 15 mit der Verarbeitungseinheit 12 verbunden. Das Speichermittel 13 ist dazu geeignet, einen oder mehrere digitale oder analoge Werte zu speichern und der Verarbeitungseinheit 12 bereitzustellen.

Elektrisch betrachtet besteht der Ultraschallwandler 11 aus einem Parallelschwingkreis und einem Serienschwingkreis. Ein zugehöriges Impedanzsignal 20 besitzt über eine Anregungsfrequenz einen charakteristischen Verlauf. Ändern sich die Parameter des Ultraschallwandlers 11, so ändert sich der Verlauf seiner Impedanzkennlinie, also des Impedanzsignals 20. Daher wird diese zur Bewertung des Ultraschallwandlers 11 herangezogen. Im Betrieb des Ultraschallsensors wird der Ultraschallwandler 11 mit einem definierten frequenzmodulierten Signal zum Schwingen angeregt.

Die Verarbeitungseinheit 12 ist eine elektrische Schaltung, die dazu eingerichtet ist, das erfindungsgemäße Verfahren zur Erkennung einer Fehlfunktion eines Ultraschallwandlers auszuführen. Dabei erfolgt zunächst ein Beaufschlagen des Ultraschallwandlers 11 mit einem Anregungssignal. Das Anregungssignal ist hier eine Wechselspannung mit einer kontinuierlich abfallenden Frequenz, die beispielsweise innerhalb von 2ms von 54kHz auf 45kHz abfällt. Das Anregungssignal könnte beispielsweise durch einen Inverter der Verarbeitungseinheit 12 erzeugt werden, der einen bekannten Strom mit abfallender Schaltgeschwindigkeit wechselweise auf die erste Signalleitung 14 und die zweite Signalleitung 15 schaltet. Das Anregungssignal ist somit in dieser ersten beispielhaften Ausführungsform ein Wechselspannungs-Sweep. Das Anregungssignal wird über die erste Signalleitung 14 und die zweite Signalleitung 15 von der Verarbeitungseinheit 12 an den Ultraschallwandler 11 übertragen, und regt diesen zu einer Schwingung an.

Darauf erfolgt ein Ermitteln eines Impedanzsignals 20, welches eine Impedanz des Ultraschallwandlers 11 hinsichtlich des Anregungssignals beschreibt. Um das Impedanzsignal 20 zu ermitteln, wird ein resultierender Spannungspegel an dem Ultraschallwandler 11 durch die Verarbeitungseinheit 12 gemessen. Es wird ein Quotient aus dem resultierenden Spannungspegel und dem Strom gebildet, durch den der Ultraschallwandler 11 angeregt wird. Damit wird der Verlauf der Impedanz des Ultraschallwandlers 11 über der Frequenz des Anregungssignals bzw. über einen zeitlichen Verlauf dargestellt und bildet das Impedanzsignal 20.

Es erfolgt ein Erzeugen einer Impedanz-Hüllkurve 21 des Impedanzsignals 20. Dazu wird das Impedanzsignal 20 entsprechend dem Frequenzverlauf des Anregungssignals gefiltert.

Um die Impedanz des Ultraschallwandlers 11 zu messen, wird dieser also zunächst mit einem bekannten Strom und einem bekannten Anregungssignal, das in dieser Ausführungsform ein Frequenz-Sweep ist, angeregt. Gleichzeitig wird der resultierende Spannungspegel an dem Ultraschallwandler 11 gemessen. Aus dem Quotienten von Spannung und Strom wird der Betrag der Impedanz berechnet. Dadurch kann der Verlauf der Impedanz über die Zeit ermittelt werden, wobei aus der Zeit auf eine Frequenz geschlossen werden kann, mit der der Ultraschallwandler 11 durch das Anregungssignal angeregt wird.

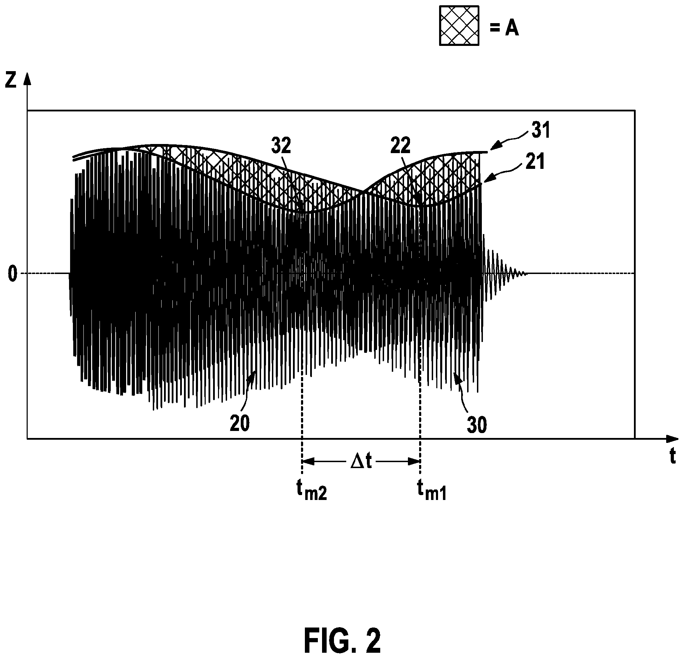

Ein beispielhaftes Impedanzsignal 20 eines fehlerhaften Ultraschallwandlers 11 ist in Figur 2 gezeigt. Das Impedanzsignal 20 weist in etwa eine Frequenz des Anregungssignals auf, durch das der Ultraschallwandler 11 angeregt wurde. Es ist ersichtlich, dass die Amplitude des Impedanzsignals 20 über den Zeitverlauf nicht konstant ist. Das ist dadurch begründet, dass der Ultraschallwandler 11 zu unterschiedlichen Zeitpunkten mit unterschiedlichen Frequenzen durch das Anregungssignal angeregt wird und die Impedanz des Ultraschallwandlers 11 frequenzabhängig ist. Durch Amplitudenwerte des Impedanzsignals 20 über den Zeitverlauf wird die Impedanz-Hüllkurve 21 geformt. Ein beispielhaftes Referenzsignal 30 ist ebenfalls in Figur 2 gezeigt. Das Referenzsignal 30 entspricht dem Impedanzsignal 20, wenn der Ultraschallwandler 11 frei von Fehlfunktionen ist. Das Referenzsignal 30 weist in etwa eine Frequenz des Anregungssignals auf, durch das der Ultraschallwandler 11 angeregt wurde. Es ist ersichtlich, dass die Amplitude des Referenzsignals 30 über den Zeitverlauf ungleich der Amplitude des Impedanzsignals 20 des fehlerhaften Ultraschallwandlers 11 ist. Dies ist dadurch begründet, dass die Impedanz des fehlerhaften Ultraschallwandlers 11 über den Frequenzverlauf des Anregungssignals durch Verschmutzungen oder Beschädigungen des Ultraschallwandlers 11 verändert wird. Durch Amplitudenwerte des Referenzsignals 30 über den Zeitverlauf wird die Referenz-Hüllkurve 31 geformt. Die Impedanz-Hüllkurve 21 weist ein Minimum 22 im mittleren Zeitbereich des Impedanzsignals 20 auf. Die Referenz-Hüllkurve 31 weist ein Minimum 32 in einem späten Zeitbereich des Referenzsignals 30 auf.

Die Auswertung der Änderung des Impedanzsignals 20 gegenüber einem nicht verschmutzten und unbeschädigten Ultraschallwandler kann als ein Indiz für eine Sensordegradation und daraus resultierender Fehlfunktionen verwendet werden. Daher erfolgt ein Vergleichen der Impedanz-Hüllkurve 21 mit der Referenz-Hüllkurve 31 durch die Verarbeitungseinheit 12, wobei eine Fehlfunktion detektiert wird, wenn die Impedanz-Hüllkurve 21 ungleich der Referenz-Hüllkurve 31 ist. Für diesen Vergleich werden die Impedanz-Hüllkurve 21 und die Referenz-Hüllkurve 31 in einen gemeinsamen zeitlichen Bezug gegenüber dem Anregungssignal gesetzt. Die Impedanz-Hüllkurve 21 und die Referenz-Hüllkurve 31 haben also einen gemeinsamen Anfangszeitpunkt und einen gemeinsamen Endzeitpunkt.

Eine Fehlfunktion wird insbesondere dann detektiert, wenn der Vergleich zeigt, dass die Größe einer Differenzfläche A, die als eine Fläche zwischen der Impedanz-Hüllkurve 21 und der Referenz-Hüllkurve 31 definiert ist, einen ersten Schwellenwert überschreitet. Dabei wird die Größe der Differenzfläche A in einer beispielhaften Ausführungsform der Erfindung mittels eines Integrals bestimmt, das über eine Differenz zwischen der Impedanz-Hüllkurve 21 und der Referenz-Hüllkurve 31 gebildet wird. In einer analogen Schaltung könnte dies beispielsweise dadurch erfolgen, dass die Impedanz-Hüllkurve 21 und die Referenz-Hüllkurve 31 jeweils durch ein Spannungssignal dargestellt werden, und diese Spannungssignale an die Eingänge eines Subtrahierers angelegt werden. Das Ausgangssignal des Subtrahierers wird über einen Kondensator integriert. Das Integral entspricht in einer solchen analogen Schaltung somit einem Ladungszustand des Kondensators. Der Ladungszustand wird mit dem ersten Schwellenwert verglichen. Wird dieser erste Schwellenwert überschritten, so wird eine Fehlfunktion detektiert. Bei einer digitalen Auswertung könnte das Integral rechnerisch bestimmt werden und der erste Schwellenwert ein digitaler Vergleichswert sein.

Optional kann eine Fehlfunktion dann detektiert werden, wenn der Vergleich zeigt, dass die Größe einer Differenzfläche A, die als eine Fläche zwischen der Impedanz-Hüllkurve 21 und der Referenz-Hüllkurve 31 definiert ist, einen ersten Schwellenwert überschreitet, wobei mittels mehrerer Abstandswerte B auf die Größe der Differenzfläche A geschlossen wird. Dabei ist ein Abstandswert B ein Differenzwert oder ein Differenzbetrag, der jeweils einen Abstand zwischen der Impedanz-Hüllkurve 21 und der Referenz-Hüllkurve 31 bei einer bestimmten Frequenz und/oder zu einem bestimmten Zeitpunkt beschreibt.

So kann ein Abstandswert beispielsweise ermittelt werden, indem ein Impedanzwert der Impedanz-Hüllkurve 21 ermittelt wird, der einem bestimmten Zeitpunkt im zeitlichen Ablauf der Impedanz-Hüllkurve 21 zugehörig ist, und zudem ein Impedanzwert der Referenz-Hüllkurve 31 ermittelt wird, der dem selben bestimmten Zeitpunkt im zeitlichen Ablauf der Referenz-Hüllkurve 31 zugehörig ist. Ein Abstandswert B, der dem bestimmten Zeitpunkt zugehörig ist, ergibt sich aus dem Betrag einer Subtraktion des Impedanzwertes der Impedanz-Hüllkurve 21 und des Impedanzwertes der Referenz-Hüllkurve 31 zu dem bestimmten Zeitpunkt.

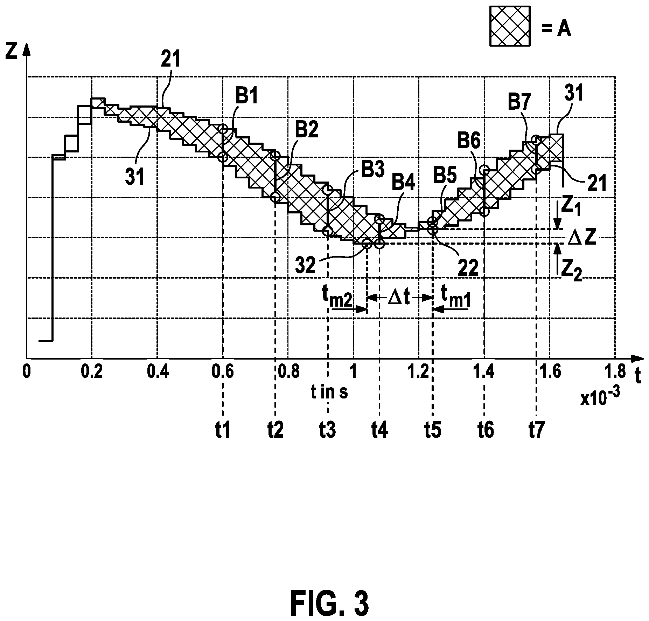

Mehrere solcher Abstandswerte B1 bis B7 sind beispielhaft in Figur 3 gezeigt. Figur 3 zeigt ein Diagramm, in dem die Impedanz-Hüllkurve 21 und die Referenz-Hüllkurve 31 gemäß einer weiteren vorteilhaften Ausführungsform der Erfindung gezeigt ist. Dabei ist die Impedanz-Hüllkurve 21 und die Referenz-Hüllkurve 31 jeweils eine Kurve, die aus einer Reihe von digitalen Impedanzwerten gebildet wird, welche zum Beispiel durch eine zeitliche Abtastung des Impedanzsignals bzw. des Referenzsignals erzeugt werden. Insbesondere werden die Impedanz-Hüllkurve 21 und die Referenz-Hüllkurve 31 mittels einer Filterung aus der IQ-Demodulation des Anregungssignals und eines Empfangsfilters erzeugt, welche eine Frequenzkodierung des Anregungssignals besitzen. Zu den Zeitpunkten t1, t2, t3, t4, t5, t5 und t7, die jeweils einem Zeitpunkt des Anregungssignal bzw. einer Frequenz des Anregungssignal zugeordnet werden können, wird jeweils ein Abstandswert B ermittelt, der den Abstand zwischen der Impedanz-Hüllkurve 21 und die Referenz-Hüllkurve 31 beschreibt.

Mittels der Abstandswerte B1 bis B7 wird auf die Größe der Differenzfläche A geschlossen. Dies könnte beispielsweise durch eine Addition der Abstandswerte B erfolgen. Entsprechend wird eine Fehlfunktion detektiert, wenn die Summe der addierten Abstandswerte größer als ein erster Schwellenwert ist. Der Schwellenwert ist dabei insbesondere so gewählt, dass eine Fehlfunktion detektiert wird, wenn eine sicherheitskritische Ungenauigkeit des Ultraschallwandlers auftritt.

Zusätzlich oder optional kann eine Fehlfunktion detektiert werden, wenn der Vergleich zeigt, dass ein zeitlicher Abstand Δt oder ein Frequenzabstand zwischen einem Minimum 22 der Impedanz-Hüllkurve 21 und einem korrespondierenden Minimum 32 der Referenz-Hüllkurve 31 einen zweiten Schwellenwert überschreitet. Dabei wird die Impedanz-Hüllkurve 21 auf Minima untersucht. Ein solches Minimum der Impedanz-Hüllkurve 21 tritt, wie auch in den Figuren 2 und 3 ersichtlich, zu einem ersten Zeitpunkt tₘ₁ auf. Dieser erste Zeitpunkt tₘ₁ wird von der Verarbeitungseinheit 12 bestimmt. Ein zweiter Zeitpunkt tₘ₂ ist in dem Speichermittel 13 hinterlegt. Dieser zweite Zeitpunkt tₘ₂ beschreibt einen Zeitpunkt, zu dem ein Minimum der Referenz-Hüllkurve 31 auftritt. Es wird ein Zeitintervall Δt ermittelt, das zwischen dem ersten Zeitpunkt tₘ₁ und dem zweite Zeitpunkt tₘ₂ liegt. Dies ist möglich, da die Impedanz-Hüllkurve 21 und die Referenz-Hüllkurve 31 in einen gemeinsamen zeitlichen Bezug gegenüber dem Anregungssignal gesetzt sind. Das ermittelte Zeitintervall Δt wird mit dem zweiten Schwellenwert verglichen, der ein Referenzzeitintervall ist. Ist das ermittelte Zeitintervall Δt größer als das Referenzzeitintervall, so wird eine Fehlfunktion detektiert.

Zusätzlich oder optional kann eine Fehlfunktion detektiert werden, wenn ein Impedanzunterschied ΔZ zwischen einem Minimum 22 der Impedanz-Hüllkurve 21 und einem korrespondierenden Minimum 32 der Referenz-Hüllkurve 31 einen dritten Schwellenwert überschreitet. Dabei wird die Impedanz-Hüllkurve 21 auf Minima untersucht. Ein solches Minimum der Impedanz-Hüllkurve 21 tritt, wie auch in den Figuren 2 und 3 ersichtlich, zu einem ersten Zeitpunkt tₘ₁ auf. Ein zu diesem ersten Zeitpunkt tₘ₁ durch die Impedanz-Hüllkurve beschriebener erster Impedanzwert Z₁ wird von der Verarbeitungseinheit 12 bestimmt. Ein zweiter Impedanzwert Z₂ ist in dem Speichermittel 13 hinterlegt. Dieser zweite Impedanzwert Z₂ ist eine Impedanz, die bei einem Minimum der Referenz-Hüllkurve 31 durch die Referenz-Hüllkurve 31 beschrieben wird. Es wird der Impedanzunterschied ΔZ ermittelt, der zwischen dem ersten Impedanzwert Z₁ und dem zweiten Impedanzwert Z₂ liegt. Der Impedanzunterschied ΔZ wird mit dem dritten Schwellenwert verglichen, der ein Referenzimpedanzunterschied ist. Ist der ermittelte Impedanzunterschied ΔZ größer als der Referenzimpedanzunterschied, so wird eine Fehlfunktion detektiert.

In allen Ausführungsformen der Erfindung kann die Referenz-Hüllkurve 30 eine Temperaturabhängigkeit, insbesondere von einer Umgebungstemperatur, aufweisen. So könnte die erfindungsgemäße Vorrichtung zur Abstandsmessung beispielsweise einen Temperaturfühler umfassen, der die Umgebungstemperatur misst. Abhängig von der gemessenen Umgebungstemperatur wird eine Referenz-Hüllkurve 30 ausgegeben, die einer Impedanz-Hüllkurve 21 eines Impedanzsignals 20 entspricht, wenn der Ultraschallwandler 11 bei der gemessenen Umgebungstemperatur frei von Fehlfunktionen ist.

Neben der obigen schriftlichen Offenbarung wird explizit auf die Offenbarung der Figuren 1 bis 3 verwiesen.

## Patentansprüche

1. Verfahren zur Erkennung einer Fehlfunktion eines Ultraschallwandlers (11), wobei das Verfahren die Schritte umfasst:
- Beaufschlagen des Ultraschallwandlers (11) mit einem Anregungssignal,
- Ermitteln eines Impedanzsignals (20), welches die Impedanz des Ultraschallwandlers (11) hinsichtlich des Anregungssignals beschreibt, durch Messen eines resultierenden Spannungspegels an dem Ultraschallwandler (11) und Bildung eines Quotienten aus dem resultierenden Spannungspegel und dem Strom, durch den der Ultraschallwandler (11) angeregt wird,
- Erzeugen einer Impedanz-Hüllkurve (21) des Impedanzsignals (20),
- Vergleichen der Impedanz-Hüllkurve (21) mit einer Referenz-Hüllkurve (31),
wobei eine Fehlfunktion detektiert wird, wenn die Impedanz-Hüllkurve (21) ungleich der Referenz-Hüllkurve (31) ist,
**dadurch gekennzeichnet, dass** eine Fehlfunktion detektiert wird, wenn die Größe einer Differenzfläche (A), die als eine Fläche zwischen der Impedanz-Hüllkurve (21) und der Referenz-Hüllkurve (31) definiert ist, einen ersten Schwellenwert überschreitet.

2. Verfahren nach Anspruch 1, wobei das Anregungssignal, insbesondere eine Wechselspannung, mehrere Frequenzen, insbesondere einen Sweep, umfasst.

3. Verfahren nach einem der vorstehenden Ansprüche, wobei das Anregungssignal für eine Abstandsmessung mit dem Ultraschallwandler (11) verwendet wird und insbesondere ein Absenken einer Verstärkung des Anregungssignals erfolgt.

4. Verfahren nach einem der Ansprüche 1 bis 3, **dadurch gekennzeichnet, dass** mittels mehrerer Abstandswerte (B) auf die Größe der Differenzfläche (A) geschlossen wird, wobei ein Abstandswert (B) ein Differenzwert oder ein Differenzbetrag ist, der jeweils einen Abstand zwischen der Impedanz-Hüllkurve (21) und der Referenz-Hüllkurve (31) bei einer bestimmten Frequenz und/oder zu einem bestimmten Zeitpunkt beschreibt.

5. Verfahren nach einem der Ansprüche 3 oder 4, **dadurch gekennzeichnet, dass** die Größe der Differenzfläche (A) mittels eines Integrals bestimmt wird, das über eine Differenz zwischen der Impedanz-Hüllkurve (21) und der Referenz-Hüllkurve (31) gebildet wird.

6. Verfahren nach einem der vorstehenden Ansprüche, **dadurch gekennzeichnet, dass** eine Fehlfunktion detektiert wird, wenn ein zeitlicher Abstand (Δt) oder ein Frequenzabstand zwischen einem Minimum (22) der Impedanz-Hüllkurve (21) und einem korrespondierenden Minimum (32) der Referenz-Hüllkurve (31) einen zweiten Schwellenwert überschreitet.

7. Verfahren nach einem der vorstehenden Ansprüche, **dadurch gekennzeichnet, dass** eine Fehlfunktion detektiert wird, wenn ein Impedanzunterschied (ΔZ) zwischen einem Minimum (22) der Impedanz-Hüllkurve (21) und einem korrespondierenden Minimum (32) der Referenz-Hüllkurve (31) einen dritten Schwellenwert überschreitet.

8. Verfahren nach einem der vorstehenden Ansprüche, **dadurch gekennzeichnet, dass** die Referenz-Hüllkurve (31) eine Temperaturabhängigkeit, insbesondere von der Umgebungstemperatur, aufweist.

9. Vorrichtung zur Abstandsmessung umfassend:
- einen Ultraschallwandler (11),
- eine Verarbeitungseinheit (12),
- ein Speichermittel (13) zum Bereitstellen einer Referenz-Hüllkurve (31), wobei die Verarbeitungseinheit (12) eingerichtet ist, ein Verfahren nach einem der vorstehenden Ansprüche auszuführen.

## Claims

1. Method for detecting a malfunction of an ultrasonic transducer (11), wherein the method comprises the steps of:
- applying an excitation signal to the ultrasonic transducer (11),
- determining an impedance signal (20), which describes the impedance of the ultrasonic transducer (11) with respect to the excitation signal, by measuring a resulting voltage level at the ultrasonic transducer (11) and forming a quotient of the resulting voltage level and the current which is used to excite the ultrasonic transducer (11),
- generating an impedance envelope curve (21) of the impedance signal (20),
- comparing the impedance envelope curve (21) with a reference envelope curve (31),
wherein a malfunction is detected if the impedance envelope curve (21) is not equal to the reference envelope curve (31), **characterized in that** a malfunction is detected if the size of a differential area (A), which is defined as an area between the impedance envelope curve (21) and the reference envelope curve (31), exceeds a first threshold value.

2. Method according to Claim 1, wherein the excitation signal, in particular an AC voltage, comprises a plurality of frequencies, in particular a sweep.

3. Method according to one of the preceding claims, wherein the excitation signal is used for a distance measurement with the ultrasonic transducer (11) and a gain of the excitation signal is reduced, in particular.

4. Method according to one of Claims 1 to 3, **characterized in that** the size of the differential area (A) is inferred by means of a plurality of distance values (B), wherein a distance value (B) is a differential value or a differential amount which respectively describes a distance between the impedance envelope curve (21) and the reference envelope curve (31) at a particular frequency and/or at a particular time.

5. Method according to either of Claims 3 and 4, **characterized in that** the size of the differential area (A) is determined by means of an integral which is formed using a difference between the impedance envelope curve (21) and the reference envelope curve (31).

6. Method according to one of the preceding claims, **characterized in that** a malfunction is detected if an interval of time (Δt) or a frequency spacing between a minimum (22) of the impedance envelope curve (21) and a corresponding minimum (32) of the reference envelope curve (31) exceeds a second threshold value.

7. Method according to one of the preceding claims, **characterized in that** a malfunction is detected if an impedance difference (ΔZ) between a minimum (22) of the impedance envelope curve (21) and a corresponding minimum (32) of the reference envelope curve (31) exceeds a third threshold value.

8. Method according to one of the preceding claims, **characterized in that** the reference envelope curve (31) has a temperature dependence, in particular on the ambient temperature.

9. Apparatus for measuring distance, comprising:
- an ultrasonic transducer (11),
- a processing unit (12),
- a storage means (13) for providing a reference envelope curve (31),
wherein the processing unit (12) is set up to carry out a method according to one of the preceding claims.

## Revendications

1. Procédé de détection d'un dysfonctionnement d'un transducteur à ultrasons (11), dans lequel le procédé comprend les étapes consistant à :
- appliquer un signal d'excitation au transducteur à ultrasons (11),
- déterminer un signal d'impédance (20) décrivant l'impédance du transducteur à ultrasons (11) par rapport au signal d'excitation en mesurant un niveau de tension résultant sur le transducteur à ultrasons (11) et en calculant un quotient entre le niveau de tension résultant et le courant par lequel le transducteur à ultrasons (11) est excité,
- générer une enveloppe d'impédance (21) du signal d'impédance (20),
- comparer l'enveloppe d'impédance (21) à une enveloppe de référence (31),
dans lequel un dysfonctionnement est détecté lorsque l'enveloppe d'impédance (21) est différente de l'enveloppe de référence (31),
**caractérisé en ce qu'**un dysfonctionnement est détecté lorsque la taille d'une aire différentielle (A), définie comme étant une aire entre l'enveloppe d'impédance (21) et l'enveloppe de référence (31), dépasse une première valeur de seuil.

2. Procédé selon la revendication 1, dans lequel le signal d'excitation, en particulier une tension alternative, comprend plusieurs fréquences, en particulier un balayage.

3. Procédé selon l'une des revendications précédentes, dans lequel le signal d'excitation est utilisé pour effectuer une mesure de distance au moyen du transducteur à ultrasons (11), et une réduction de l'amplification du signal d'excitation est en particulier produite.

4. Procédé selon l'une des revendications 1 à 3, **caractérisé en ce que** la taille de l'aire différentielle (A) est établie au moyen de plusieurs valeurs de distance (B), dans lequel une valeur de distance (B) est une valeur de différence ou un degré de différence qui décrit respectivement une distance entre l'enveloppe d'impédance (21) et l'enveloppe de référence (31) à une certaine fréquence et/ou à un certain instant.

5. Procédé selon l'une des revendications 3 ou 4, **caractérisé en ce que** la taille de l'aire différentielle (A) est déterminée au moyen d'une intégrale calculée par l'intermédiaire d'une différence entre l'enveloppe d'impédance (21) et l'enveloppe de référence (31).

6. Procédé selon l'une des revendications précédentes, **caractérisé en ce qu'**un dysfonctionnement est détecté lorsqu'un intervalle de temps (Δt) ou un intervalle de fréquence entre un minimum (22) de l'enveloppe d'impédance (21) et un minimum correspondant (32) de l'enveloppe de référence (31) dépasse une deuxième valeur de seuil.

7. Procédé selon l'une des revendications précédentes, **caractérisé en ce qu'**un dysfonctionnement est détecté lorsqu'une différence d'impédance (ΔZ) entre un minimum (22) de l'enveloppe d'impédance (21) et un minimum correspondant (32) de l'enveloppe de référence (31) dépasse une troisième valeur de seuil.

8. Procédé selon l'une des revendications précédentes, **caractérisé en ce que** l'enveloppe de référence (31) présente une dépendance thermique, en particulier par rapport à la température ambiante.

9. Dispositif de mesure de distance comprenant :
- un transducteur à ultrasons (11),
- une unité de traitement (12),
- un moyen de stockage (13) destiné à fournir une enveloppe de référence (31), dans lequel l'unité de traitement (12) est conçue pour mettre en oeuvre un procédé selon l'une des revendications précédentes.
